# FASCICULE DE BREVET EUROPEEN

(11) **EP 1 049 618 B1**
(45) Date de publication et mention de la délivrance du brevet: **17.09.2003**
(21) Numéro de dépôt: 99901666.0
(22) Date de dépôt: 29.01.1999
(51) Int. Cl.: B62K 25/24

(54) **FOURCHE AVANT SUSPENDUE POUR VELO TOUT TERRAIN ET MOTO**
VORDERRADGABEL- AUFHÄNGUNG FÜR MOUNTAINBIKE UND MOTORRAD
SUSPENDED FRONT FORK FOR MOUNTAIN BIKE AND MOTORCYCLE

(30) Priorité: 30.01.1998 FR 9801319
(43) Date de publication de la demande: 08.11.2000
(73) Titulaire: Lansac, Hervé, 69300 Caluire (FR); Allard Latour, Franck, 69570 Dardilly (FR)
(72) Inventeur: Lansac, Herve, 69300 Caluire (FR); Allard Latour, Franck, 69570 Dardilly (FR)
(74) Mandataire: Maureau, Philippe
(86) Numéro de dépôt international: FR9900191
(87) Numéro de publication internationale: WO99038760

(56) Documents cités:
- EP-A- 0 001 344
- WO-A-97/46443
- DE-A- 19 635 939
- FR-A- 2 418 742
- GB-A- 268 148
- GB-A- 281 797
- GB-A- 2 038 736

## Description

La présente invention concerne une fourche avant suspendue pour véhicule à deux roues, et plus particulièrement moto et vélo tout terrain.

La fourche avant d'un tel véhicule a deux rôles primordiaux à jouer :
1. Rôle directionnel : elle doit assurer le braquage et la stabilité du véhicule en permanence (virage, ligne droite, freinage, accélération).
2. Rôle de suspension : cette fonction est nécessaire pour sauvegarder le confort, mais aussi pour maintenir en toute circonstance le pneu en contact avec le sol.

La difficulté à concevoir une telle fourche vient de ce que le deuxième rôle (suspension) implique une variation de géométrie pas toujours compatible avec le premier rôle (directionnel).

Ce compromis existe actuellement avec la fourche dite télescopique.

Cette fourche est constituée d'un pivot de direction, de deux branches tubulaires et télescopiques parallèles au pivot de direction. Les parties supérieures de ces branches sont fixées à ce pivot par l'intermédiaire de deux supports en forme de T. Il y a un T à chaque extrémité du pivot. Des combinés ressort/amortisseur sont contenus dans les deux branches pour assurer la fonction de suspension. L'axe de roue est fixé aux extrémités inférieures des deux branches.

On trouve ce type de fourche sur 99 % des motocyclettes produites dans le monde et sur plus de 80 % des vélos tout terrain à fourche suspendue.

Avantages de la fourche télescopique :
1. Esthétique : c'est un mécanisme très simple en apparence, la partie mécanique étant dissimulée à l'intérieur des tubes.
2. Coût de fabrication réduit par la simplicité du mécanisme.
3. Fonctionnement en harmonie avec la géométrie d'un véhicule à deux roues : l'inclinaison de la fourche est telle que les forces qui lui sont appliquées au freinage ou au franchissement d'un obstacle par la roue, sont coaxiales à peu de choses près avec les branches de cette fourche, d'où peu de flexion.
4. Une géométrie constante avec le débattement de la suspension, car le déport de l'axe de roue par rapport au pivot de direction est constant.

A assiette constante (sans tangage), la chasse est donc constante. Celle-ci ne varie qu'avec la variation d'assiette (tangage) : la plongée (enfoncement de la suspension avant, détente de la suspension arrière) provoque sa diminution. A l'inverse, le cabrage provoque son augmentation. Lors d'un freinage (donc en plongée), le report des masses sur l'avant alourdissant la direction, devrait interdire au pilote de tourner en même temps qu'il freine.

La diminution de la chasse compensant l'augmentation de la charge sur l'avant, le pilote conserve la faculté de changer facilement de direction.

Inconvénients de la fourche télescopique :

### 1. Les frottements.

Les plongeurs doivent glisser dans les fourreaux de fourche sans jeu. Il y a donc des frottements d'autant plus importants que les bras sont soumis à des efforts de flexion.

La technique motocycliste actuelle veut que les fourches soient de plus en plus verticales (moins 10° en 20 ans). Celles-ci sont donc soumises à des efforts de flexion de plus en plus importants. Les progrès réalisés par les dispositifs de freinage vont dans le même sens négatif (plus d'effort en flexion).

Pour les vélos tout terrain, les variations d'assiette sont si importantes du fait du faible empattement, que l'on arrive au même problème, une fourche très verticale au freinage entraînant de grosses contraintes en flexion. Dans ce contexte, les fourches télescopiques fonctionnent de plus en plus mal.

### 2. La linéarité de la suspension d'une fourche télescopique.

Une suspension avant est, plus encore qu'une suspension arrière, soumise à des variations de charge très importantes. Sur une moto, on passe facilement de zéro kg en charge minimale à 300 kg en charge maximale. Une suspension linéaire ne peut pas fonctionner correctement avec des charges aussi différentes (trop dure pour les forces minimum et trop souple pour les forces maximum).

### 3. La rigidité.

De nombreuses études montrent cette faiblesse. Sur une moto, la rigidité tortionnelle d'une fourche télescopique n'atteint pas 6 % de celle du cadre + moteur, sa rigidité à la flexion longitudinale est à moins de 60 %, sa rigidité à la flexion transversale atteignant à peine 35 %.

### 4. La géométrie.

La chasse est déterminée par l'angle de chasse (angle de la colonne de direction avec la verticale), le déport d'axe de roue et la circonférence du pneumatique. Pendant le fonctionnement d'une fourche télescopique, la chasse varie en fonction de la seule variable, l'angle de chasse (par la variation d'assiette), mais l'amplitude de la variation de chasse avec l'assiette n'est pas maîtrisable.

Les autres fourches
- Les fourches à balancier (surtout pour les scooters) sont choisies pour leur faible encombrement en hauteur car elles sont bien adaptées aux petites roues. Elles ont peu d'amplitude, sauf la fourche connue sur la dénomination EARLES qui offre un grand balancier pour un débattement plus important, mais a beaucoup d'inertie en rotation autour du pivot de direction.
   Ces balanciers sont généralement à roue poussée, mais il en existe à roue tirée. Rappelons qu'une fourche à roue tirée signifie que le bras est situé en avant de l'axe de roue par rapport au sens de déplacement, l'inverse pour une roue poussée.
- Les fourches à parallélogramme.
   La fourche à parallélogramme est l'ancêtre de la fourche suspendue pour la moto. Elle a été détrônée aujourd'hui par la fourche télescopique. Elles ont pourtant été inventées toutes deux au début du siècle. Les fourches à parallélogramme ont disparu sur les motos, mais il en existe plusieurs pour les vélos tout terrain. Elles sont toujours à roue poussée. Elles souffrent de petit débattement (80/90 millimètres maximum), et on ne retrouve pas leurs avantages théoriques sur le terrain.

Une fourche à parallélogramme pour vélo est par exemple décrite dans le document WO 97/46443.

Le but de l'invention est de fournir une fourche avant suspendue qui élimine les frottements, possède une suspension progressive, présente une grande rigidité avec possibilité de réglage de la géométrie et de variation de l'angle de chasse, afin de les adapter au type de véhicule à équiper.

A cet effet, la fourche comprend les caractéristiques de la revendication 1.

Suivant une forme d'exécution, le bâti rigide comprend deux platines horizontales, supérieure et inférieure, fixées respectivement aux extrémités supérieure et inférieure du pivot de direction, sur les bords latéraux desquelles sont fixés les flasques verticaux.

Dans une forme traditionnelle de réalisation, cette fourche comprend deux bras parallèles réunis par une pièce de rigidification, chaque biellette se dédoublant en deux branches solidarisées.

Suivant une caractéristique de l'invention, l'axe d'articulation de la biellette supérieure sur le bâti rigide est situé entre les deux platines horizontales, tandis que l'axe d'articulation de la biellette inférieure sur le bâti rigide est situé en dessous de la platine inférieure.

Afin de permettre un débattement important sans perturbation des conditions d'utilisation du véhicule, les branches des deux biellettes ont un écartement supérieur aux largeurs respectives de la platine inférieure, du pivot de direction et de l'élément amortisseur, pour pouvoir passer de part et d'autre de ces éléments.

Les branches des biellettes peuvent être situées à l'intérieur ou à l'extérieur des flasques verticaux.

Selon une première possibilité, l'élément élastique amortisseur agit directement sur l'une des deux biellettes, sur une pièce solidaire de la biellette considérée, l'axe d'articulation de l'amortisseur sur cette pièce étant déporté par rapport à l'axe de la biellette, de telle sorte qu'en position de compression maximale la ligne passant par l'axe d'articulation de l'amortisseur et par l'axe d'articulation de la biellette considérée sur le bâti rigide, soit sensiblement perpendiculaire à l'axe de l'amortisseur.

Il est important de noter que cet agencement permet de créer une progressivité de l'amortissement.

Suivant une autre forme d'exécution de cette fourche, l'extrémité inférieure de l'élément élastique amortisseur est montée articulée sur une patte elle-même montée pivotante sur le bâti rigide et sur laquelle est montée pivotante une extrémité d'une tige dont l'autre extrémité est montée pivotante sur la biellette inférieure, les trois axes d'articulation sur la patte étant disposés de façon à former un triangle dans lequel l'axe d'articulation de l'extrémité inférieure de l'amortisseur sur la patte est situé entre les deux autres axes et en dessous de ceux-ci.

De toute façon, l'invention sera bien comprise à l'aide de la description qui suit, en référence au dessin schématique annexé représentant plusieurs formes d'exécution de cette fourche :
Figure 1 est une vue de côté d'une première fourche, au repos ;
Figure 2 en est une vue de face ;
Figure 3 en est une vue de côté en position comprimée de l'élément amortisseur ;
Figures 4 à 6 sont trois vues d'une seconde fourche à grand débattement, correspondant respectivement aux vues des figures 1 à 3 de la première forme d'exécution ;
Figure 7 est une courbe d'élasticité de la fourche de figures 4 à 6 ;
Figures 8 et 9 sont deux vues respectivement de côté et de face d'une fourche de vélo tout terrain polyvalente ;
Figure 10 représente la courbe d'élasticité de cette fourche polyvalente ;
Figures 11 et 12 sont des vues de côté et de face respectivement, d'une fourche pour motocyclette de route de cylindrée importante ;
Figure 13 représente la courbe d'élasticité de cette fourche pour motocyclette.

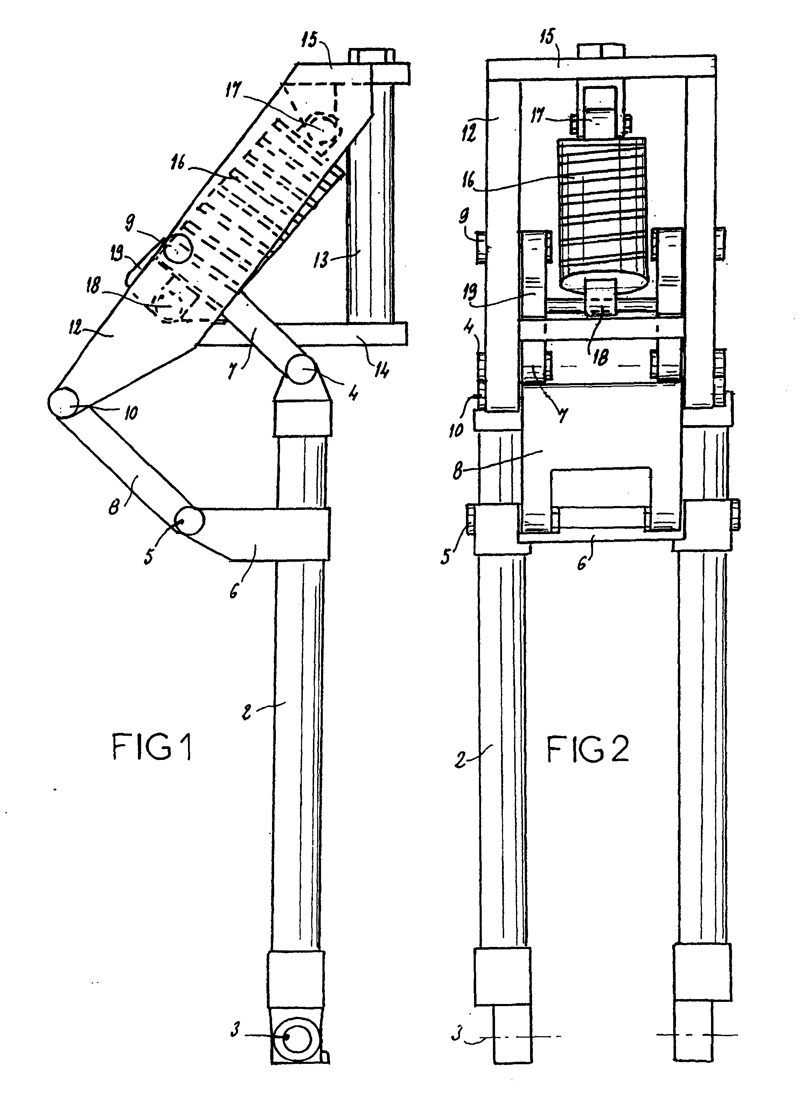

La fourche représentée à la figure 1 comprend deux bras parallèles 2 comportant à leur extrémité inférieure un dispositif de fixation de l'axe d'une roue 3, et à leur extrémité supérieure un axe 4 de biellette.

Environ 15 à 20 centimètres en dessous de cet axe 4, cette valeur étant un compromis entre contrainte et espace disponible, se trouve un deuxième axe 5 de biellette et un ponton 6 réunissant les deux bras.

Deux biellettes 7 et 8 de même longueur sont montées pivotantes autour d'axes horizontaux 9 et 10 positionnés dans des flasques verticaux 12 réunis au pivot de direction 13 en avant de celui-ci par l'intermédiaire d'une platine inférieure 14 fixée à l'extrémité inférieure dudit pivot et d'une platine supérieure 15 fixée à l'extrémité supérieure dudit pivot.

Les axes 9 et 10 sont superposés et distants de 15 à 20 centimètres environ de manière à ce que les biellettes 7, 8 forment l'angle approprié. Les axes 9 et 10 définissent un plan généralement parallèle au pivot de direction, mais ce plan pourra être incliné en fonction de la différence de longueur des biellettes par exemple. L'autre particularité de ces axes 9 et 10 est d'être située en avant des deux bras 2 . Cette fourche comprend aussi un combiné ressort/amortisseur 16, dont l'extrémité supérieure est fixée de façon articulée en 17 sur la platine supérieure 15, et dont l'extrémité inférieure est fixée de façon articulée en 18 sur une pièce 19 solidaire de la biellette supérieure. Il peut être noté que le point 18 est positionné de telle sorte qu'en position de compression maximale de l'élément 16, la ligne passant par le point 18 et le point 9 est sensiblement perpendiculaire à l'axe de l'élément amortisseur 16 .

Les deux bras 2 n'ont pas d'éléments télescopiques, et sont donc parfaitement rigides. Avantageusement, ils sont tubulaires, de manière à pouvoir régler la distance entre les axes 4 et 5 au moyen de colliers coulissants. Ils peuvent aussi être en alliage léger, usinés ou coulés, mécano-soudés ou encore en carbone ou similaire de manière à résister aux contraintes. Pour les bras non tubulaires, la distance entre les axes 4 et 5 peut être réglable par excentriques.

Les biellettes 7 et 8 sont en alliage d'aluminium usiné pour le vélo, ou en construction mécano-soudée pour la moto.

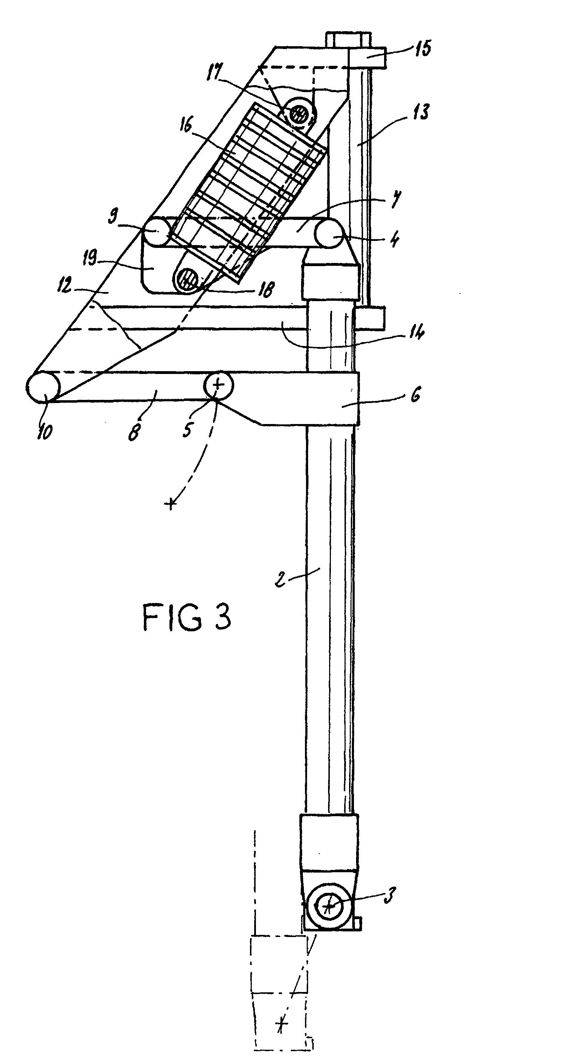

Comme toute fourche à parallélogramme, la fourche selon l'invention est plus rigide qu'une fourche télescopique et dépourvue de frottements. Comme une fourche télescopique, elle a plus de débattement qu'une fourche à parallélogramme à roue poussée. Contrairement à ces deux types de fourche, elle a une progressivité de suspension contenue dans son fonctionnement :
- suspension détendue représentée à la figure 1, les biellettes 7 et 8 ont leurs axes d'articulation 9 et 10 sur les flasques 12 situés au-dessus et en avant des axes d'articulation 4 et 5 sur les bras. La force appliquée à l'axe de roue, donc aux bras, lors du franchissement d'un obstacle par la roue ou lors d'un freinage, est perpendiculaire aux biellettes 7 et 8 et crée un couple de compression maximum.
- suspension en compression représentée à la figure 3, les biellettes 7 et 8 exécutent une rotation de l'ordre de 90°, leurs axes d'articulation 9, 10 sur les flasques se trouvant alors en dessous et toujours en avant des axes 4 et 5 sur les bras. Les biellettes 7, 8 se trouvent donc parallèles à l'axe de la force appliquée comme précédemment à l'axe de roue et aux bras. Le couple de compression devient pratiquement nul. La suspension durcit plus vite qu'une suspension linéaire. Elle est progressive.

Par comparaison, les fourches à parallélogramme à roue poussée ont un comportement inverse : leur suspension est régressive.

La fourche selon l'invention laisse à son concepteur le choix de l'amplitude de la chasse avec la variation d'assiette : si les biellettes sont parallèles (donc égales) cette amplitude dépend de la différence entre l'inclinaison des biellettes par rapport à une perpendiculaire au pivot de direction, suspension détendue, et leur inclinaison en compression maximale, ces valeurs étant prises en valeur absolue. Plus cette différence est importante, plus les variations de chasse sont faibles. Il est possible de réduire encore cette amplitude de la chasse en ayant recours à des biellettes de longueurs inégales, et des entraxes sur les flasques et sur les bras choisis judicieusement. Cette solution devient nécessaire pour des vélos et des motos dont les débattements dépassent 170 mm. Cependant, même dans ce dernier cas, les biellettes doivent toujours décrire autour de leur axe sur les platines un angle de l'ordre de 60° à 90° pour le meilleur compromis encombrement/débattement, cet angle contenant obligatoirement la perpendiculaire au pivot de direction passant par cet axe.

Compte tenu de l'amplitude de leur rotation, les biellettes ne peuvent jamais se trouver en avant d'une parallèle au pivot de direction passant par leur axe sur les flasques.

La fourche est adaptable à tous les vélos, à toutes les motos :
hauteur, chasse, caractéristiques de suspension (le combiné ressort amortisseur est indépendant de la fourche et peut être choisi dans la gamme des fabricants, à ressort ou pneumatique) sont adaptables à chaque cas.

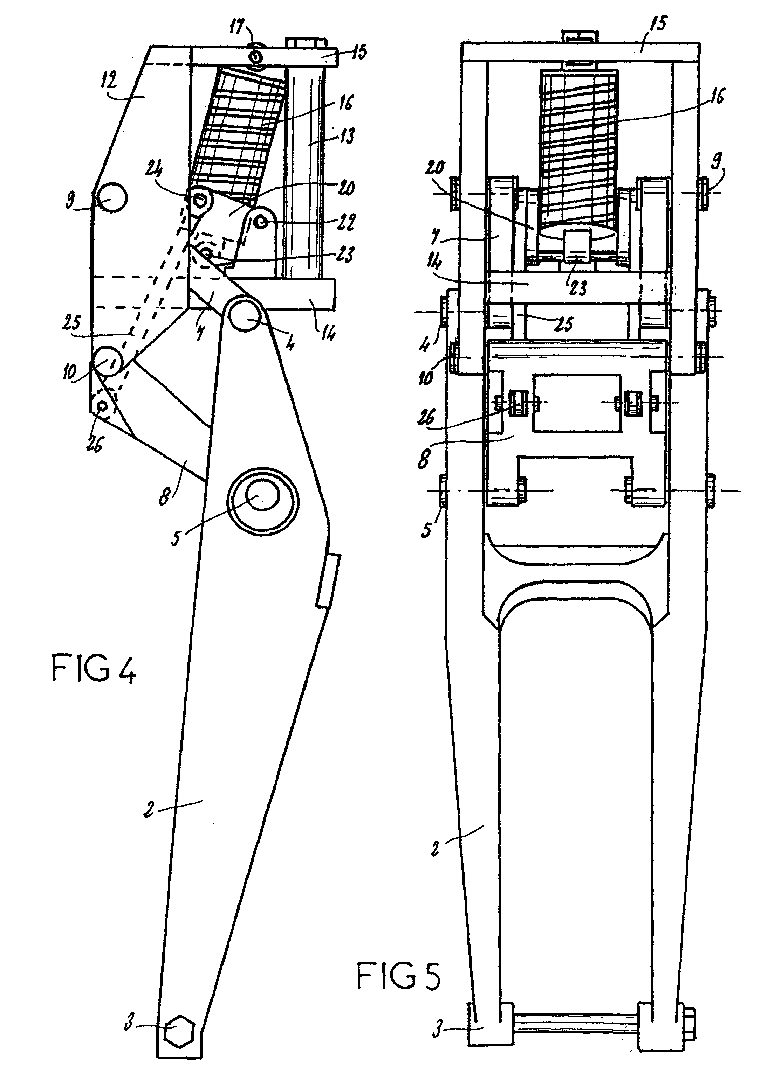

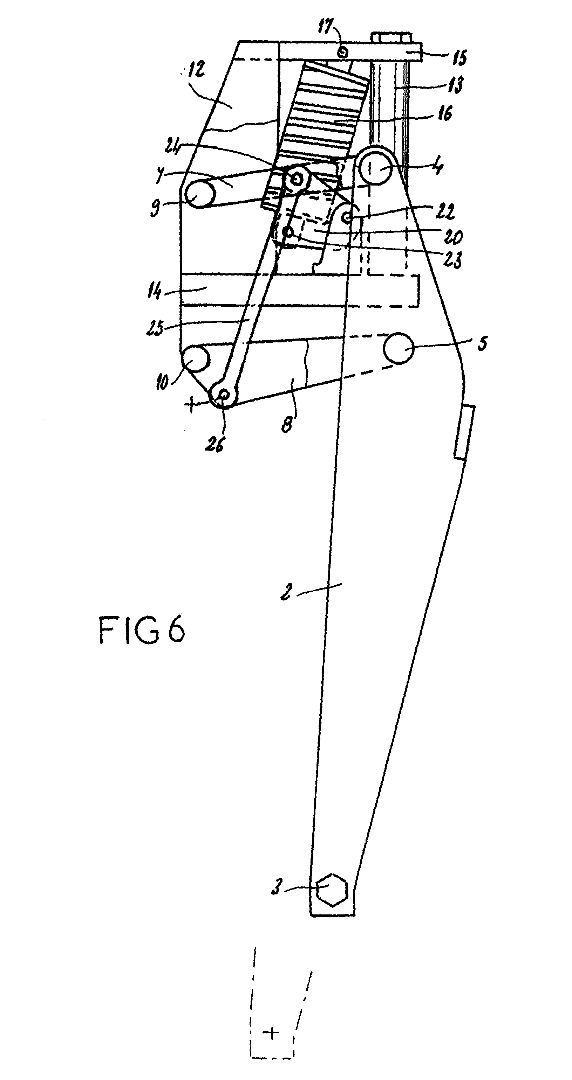

Les figures 4 à 6, dans lesquelles les mêmes éléments sont désignés par les mêmes références que précédemment, représentent une fourche de vélo tout terrain de descente à très grand débattement (220 mm) à biellettes 7, 8 de longueurs inégales afin d'avoir une très faible variation de chasse. Elle possède un dispositif de tige de compression s'intercalant entre la biellette inférieure 8 et l'amortisseur 16 destiné à augmenter la progressivité de suspension.

A cet effet, une patte 20 est montée articulée autour d'un axe 22 sur la platine inférieure 14 . Sur cette patte est également articulée en 23 l'extrémité inférieure de l'élément amortisseur 16, et en 24 l'extrémité supérieure d'une tige 25 dont l'autre extrémité est articulée en 26 sur la biellette inférieure 8 . Comme montré au dessin, les trois axes d'articulation 22, 23 et 24 forment un triangle, l'axe 23 de montage de l'extrémité inférieure de l'amortisseur étant situé entre les deux autres axes et en dessous de celui-ci.

Les biellettes, usinées en aluminium, peuvent s'articuler sur des roulements à aiguilles ou sur des bagues autolubrifiantes. Cette dernière solution a été préférée ici pour des raisons de volume et de capacité de charge.

### Variation de géométrie.

Comparée à une fourche télescopique de descente de 145 mm de débattement (il n'en existe pas aujourd'hui de 220 mm) montée sur un vélo de 1 050 mm d'empattement et possédant une suspension arrière de 200 mm de débattement environ, les variations extrêmes de chasse sont :
- en plongée maximum :
   fourche télescopique usuelle : 20 millimètres
   nouvelle fourche : 60 millimètres
- en cabrage minimum :
   fourche télescopique : 150 millimètres
   nouvelle fourche : 90 millimètres.

Soit pour la fourche télescopique 130 mm d'amplitude et seulement 30 millimètres pour la fourche selon l'invention, malgré un débattement très supérieur pour cette dernière (220 millimètres au lieu de 145).

L'axe 5 peut être déplacé sur les bras 2 par un système d'excentriques modifiant à volonté cette variation de chasse (réglage vertical) mais aussi la valeur moyenne de cette chasse (réglage horizontal).

L'avantage de cette fourche est donc de conserver une bonne stabilité au véhicule au freinage (plongée maximum) malgré un débattement de suspension très important, les 20 millimètres de chasse obtenus avec la fourche télescopique rendant le vélo inconduisible.

A l'inverse, une chasse de 150 millimètres en cabrage, obtenue avec la même fourche télescopique interdit au conducteur de changer de direction lorsqu'il roule vite. L'invention évite ces deux extrêmes.

### Progressivité de suspension :

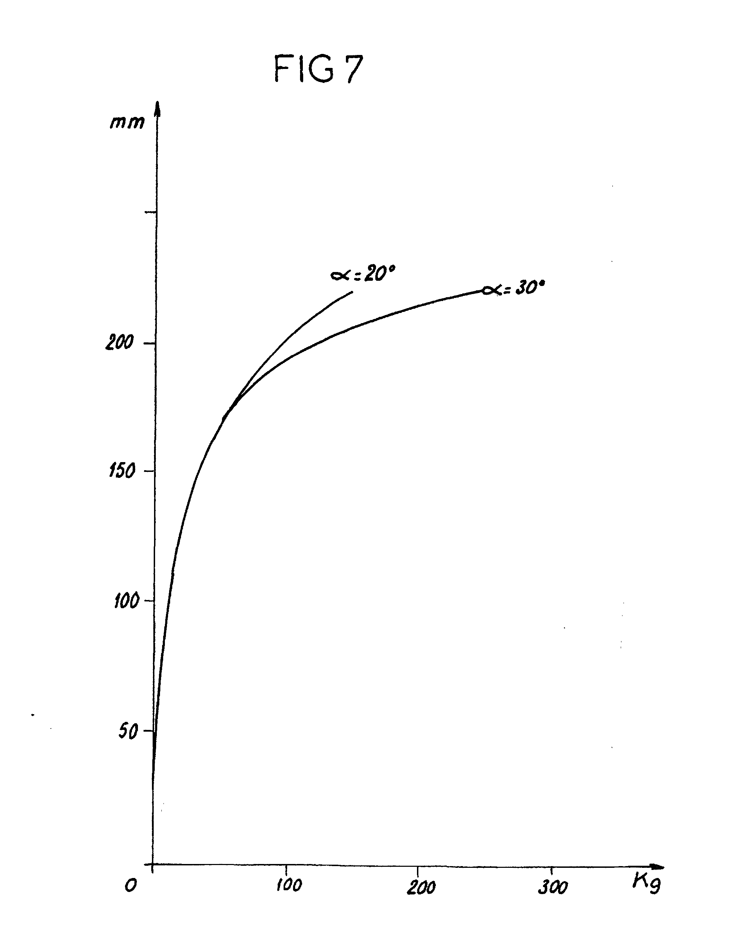

La figure 7 donne les courbes d'élasticité de la fourche de descente avec un tarage de ressort de 75N/mm en tenant compte de l'angle α que fait la force appliquée à l'axe de roue avec la direction du pivot de fourche. Ces courbes montrent que l'extrême progressivité de la fourche de descente permet de concilier ce qui est impossible avec une suspension linéaire :
- en début de course, une force de compression de 5 kg provoque un enfoncement de 50 mm, soit une très grande souplesse de suspension.
- en fin de course, la même force de 5 kg ne provoque plus qu'une compression de 2 mm. On note qu'une augmentation de α diminue encore cette compression. Or, α augmente avec l'intensité du freinage. Cela signifie donc que la fourche possède dans son fonctionnement un effet antiplongée.

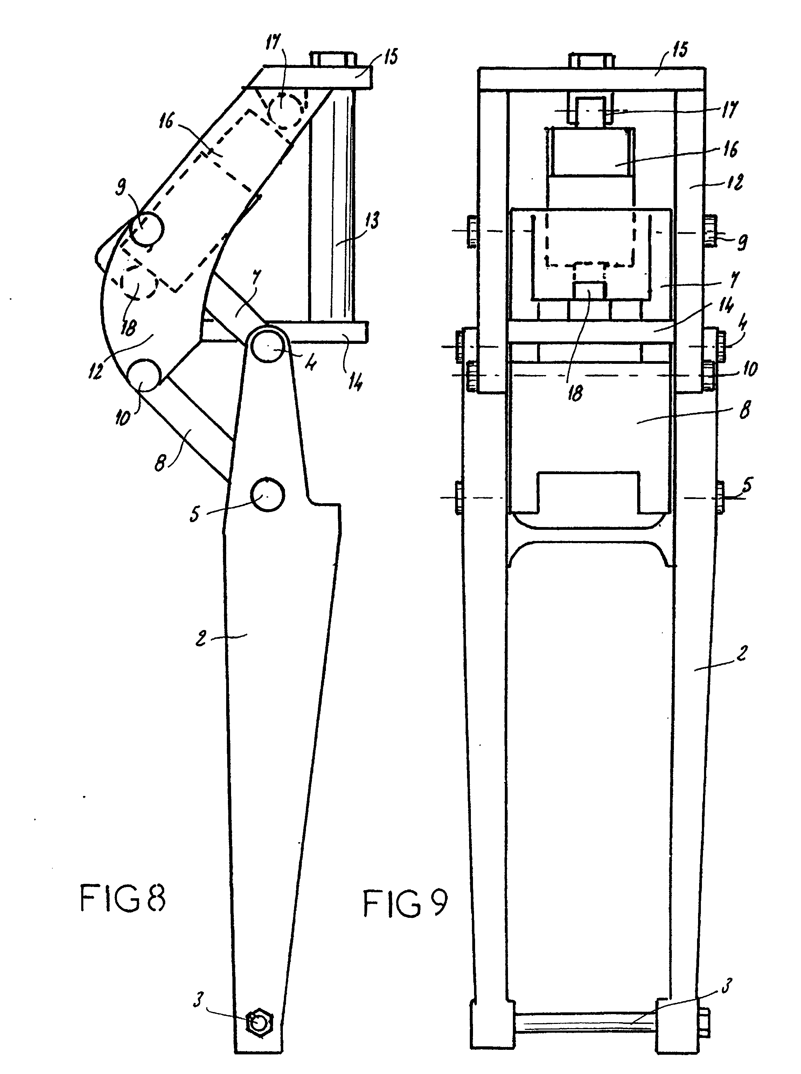

Les figures 8 et 9, dans lesquelles les mêmes éléments sont désignés par les mêmes références que précédemment, représentent une fourche de vélo tout terrain polyvalente. Le débattement est de 135 mm. Les variations d'assiette étant moins importantes avec 135 mm que dans le cas précédent (descente) avec 220 mm, celles-ci engendrent moins de variation de chasse. Pour cette raison, les biellettes 7, 8 sont parallèles et de longueur égale. Il n'y a pas de tige de poussée 25 entre biellette et amortisseur, car la progressivité "naturelle" de cette fourche est suffisante pour un débattement de 135 mm. L'amortisseur 16 est actionné par la biellette supérieure 7.

On utilise avantageusement dans ce cas un combiné oléopneumatique et non un combiné ressort amortisseur.

### Variation de géométrie.

En reprenant la même base de comparaison que pour la fourche de vélo de descente (même vélo, même fourche de référence), les variations extrêmes de chasse sont les suivantes :
- en plongée maximum :
   fourche télescopique : 20 millimètres
   nouvelle fourche : 50 millimètres
- en cabrage maximum :
   fourche télescopique : 150 millimètres
   nouvelle fourche : 140 millimètres

Soit 130 millimètres d'amplitude pour la chasse de la fourche télescopique, et 90 millimètres pour la nouvelle fourche.

Du fait de la suspension progressive, la nouvelle fourche se trouve très difficilement en situation de cabrage maximum, ayant beaucoup de course négative (compression résultant du seul poids vélo + pilote). Il n'est pas prévu de réglage pour la position des axes 4 et 5, les biellettes devant rester parallèles.

### Progressivité de suspension

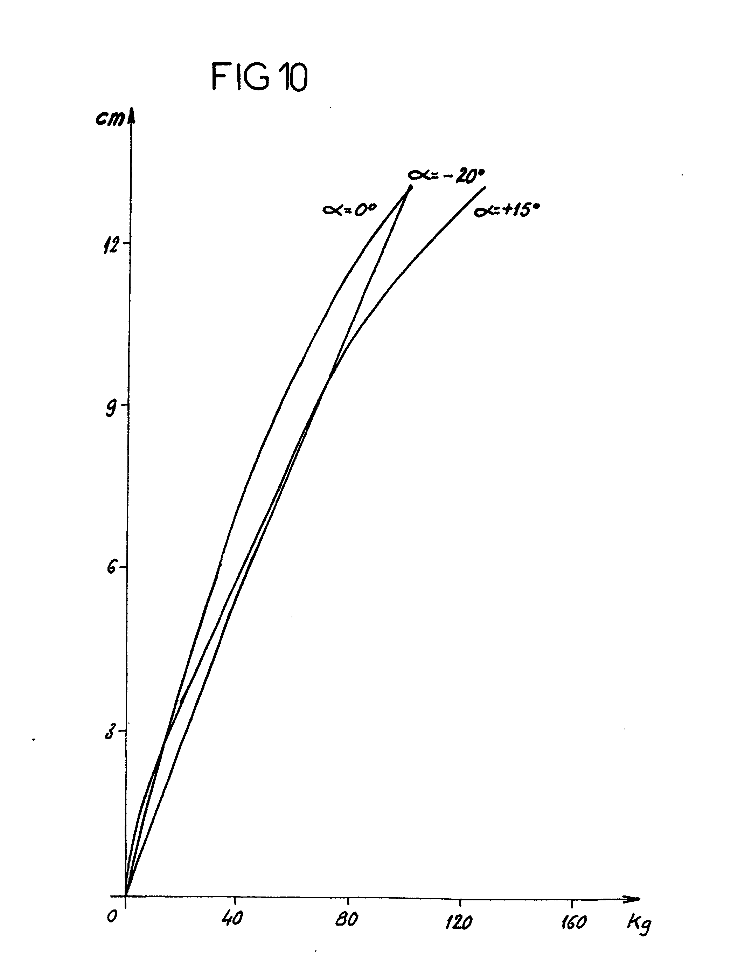

La figure 10 donne les courbes d'élasticité de cette fourche vélo tout terrain polyvalente avec un tarage de ressort de 75N/mm en tenant compte de l'angle α que fait la force appliquée à l'axe de roue avec la direction du pivot de fourche. La courbe α = -20° correspond à des forces verticales : le poids velo + pilote sur l'axe de roue avant, ainsi que les forces de pompage au pédalage. Cette courbe est rectiligne (fonctionnement linéaire). Un pompage induit par le pédalage faisant varier la charge sur l'avant d'environ 20 kg (entre 30 et 50 kg par exemple) cela représente une course de 25 millimètres, qui est diminuée par les forces d'amortissement. L'amplitude reste dans une norme acceptable. La courbe α = +15° correspond aux forces induites par les freinages et le franchissement d'obstacles de grande amplitude. La courbe α = 0° correspond au franchissement d'obstacles de faible amplitude. La divergence de ces deux courbes vers le haut montre un effet antiplongée de la nouvelle fourche, limitant les variations d'assiette (tangage). La courbe α = + 15° montre une très grande progressivité : 5 kg provoquent un enfoncement de 15 millimètres en début de course, 5 kilogrammes provoquent un enfoncement de 5 millimètres en fin de course. Cela interdit pratiquement le talonnage sur les gros obstacles ou sur les freinages appuyés. Cette nouvelle fourche a donc un avantage de géométrie et de progressivité par rapport à une fourche télescopique.

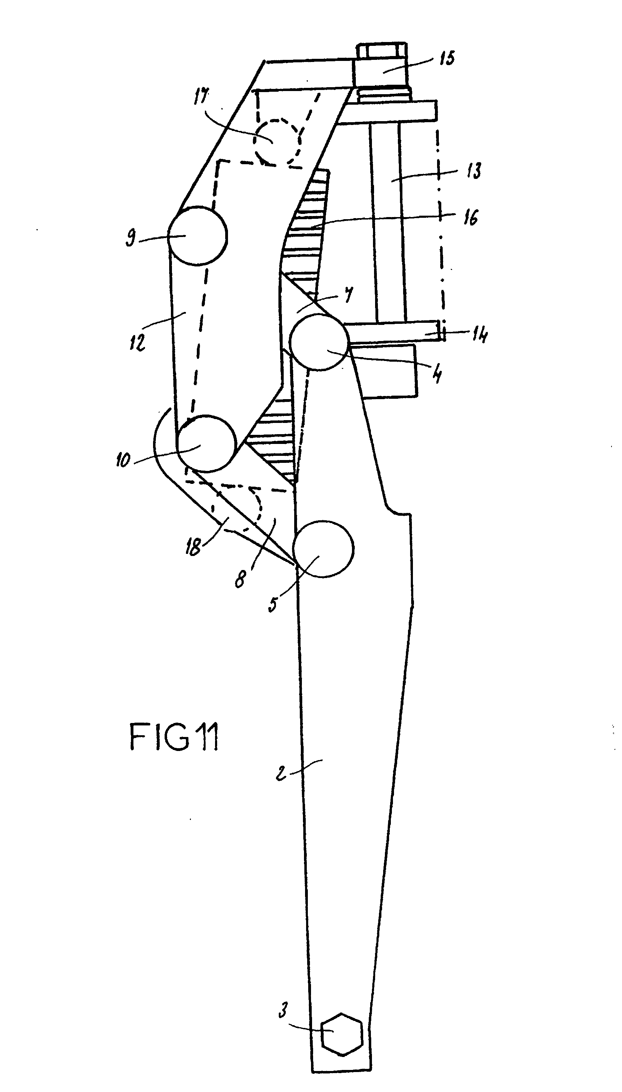

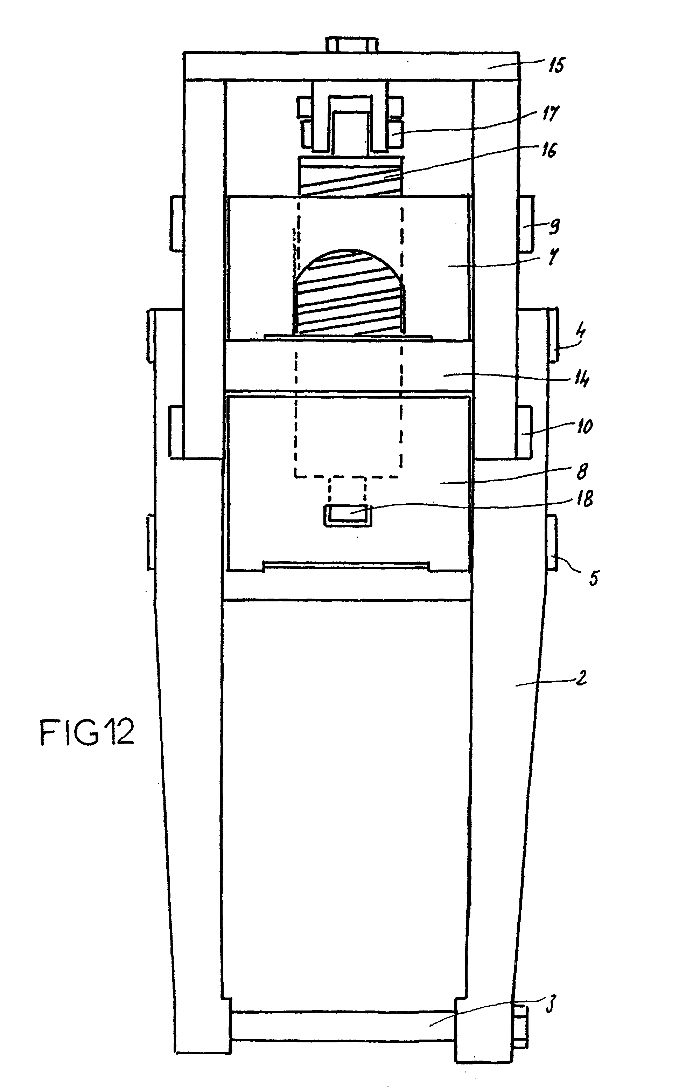

Les figures 11 et 12, dans lesquelles les mêmes éléments sont désignés par les mêmes références que précédemment, représentent une fourche pour motocyclette de route de grosse cylindrée (750 cm² dans le cas précis). Son débattement est de 135 mm, les biellettes 7, 8 sont parallèles et de même longueur car, du fait des faibles amplitudes de suspension, les variations d'assiette sont réduites. Les combinés ressort amortisseur 16 de moto étant beaucoup plus longs que ceux des vélos, c'est la biellette inférieure 8 qui comprime celui de cette fourche. Les bras 2 sont en alliage léger usiné avec ponton de rigidification au niveau des axes de billettes inférieures, réunissant les deux bras. Les articulations sont constituées par des roulements à aiguilles combinés.

### Variation de géométrie.

Les problèmes posés par la fourche télescopique dans le comportement d'une moto de route ne sont pas les mêmes que ceux concernant un vélo tout terrain.

Il est difficile de concilier sur une moto maniabilité en entrée de virage et stabilité à haute vitesse, car il y a soit trop de chasse pour la mise sur l'angle, soit pas assez en ligne droite. L'assiette de la moto variant peu, l'amplitude de la chasse est insuffisante à l'inverse du vélo tout terrain.

Le cabrage en sortie de virage sous l'effet de la réaccélération, augmente beaucoup trop la chasse, obligeant le pilote à élargir sa trajectoire.

Comparée à une fourche télescopique de 120 millimètres de débattement, montée sur une moto sportive de 1 400 millimètres d'empattement et 130 millimètres de débattement pour sa suspension arrière la nouvelle fourche a les variations de chasse suivantes :
- en plongée maximum :
   fourche télescopique : 85 millimètres
   nouvelle fourche : 85 millimètres
- en statique :
   fourche télescopique : 104 millimètres
   nouvelle fourche : 110 millimètres
- En cabrage maximum :
   fourche télescopique : 133 millimètres
   nouvelle fourche : 103 millimètres

A maniabilité égale en entrée de virage (plongée maximum), la nouvelle fourche donne donc plus de stabilité en ligne droite (110 mm au lieu de 104 mm de chasse), et surtout une beaucoup plus grande facilité à sortir des virages puisque la chasse diminue (103 millimètres au lieu de 133 millimètres pour la fourche télescopique).

### b. Progressivité de suspension :

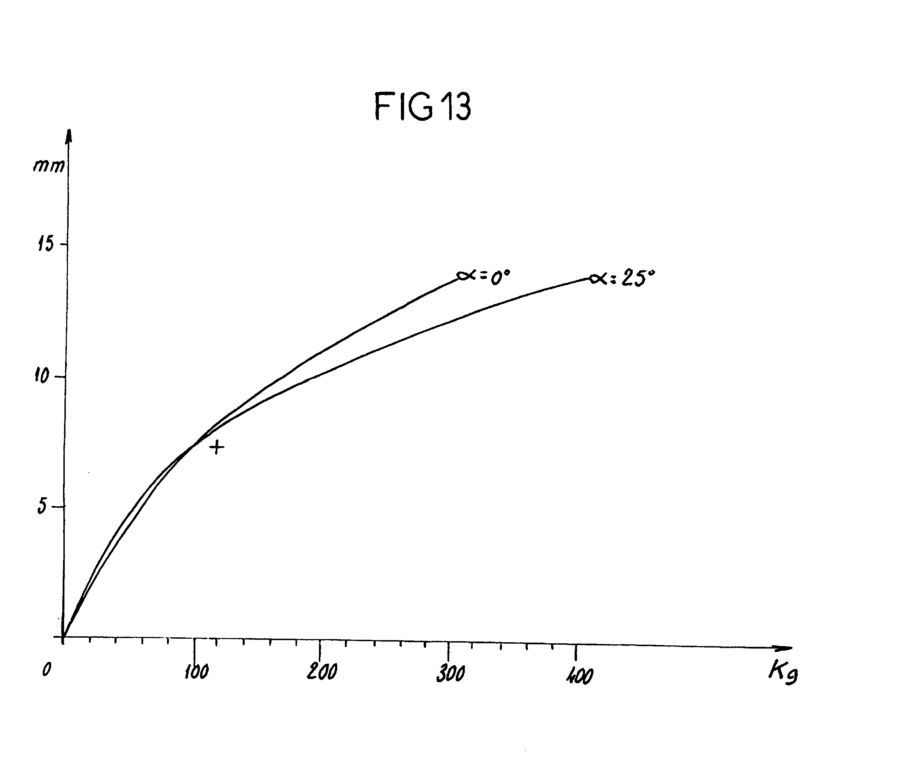

La figure 13 montre les courbes d'élasticité de la nouvelle fourche moto pour α = 0° et α = 25° avec un tarage de ressort de 110N/mm. La première correspond aux forces induites par le franchissement de petites dénivellations, les plus couramment rencontrées sur la route. La courbe a = 25° correspond aux forces induites par un freinage violent, forces inclinées de 45° par rapport à la verticale diminuées des 20° d'inclinaison du pivot de direction. Le point isolé sur le graphique correspond à l'enfoncement de la suspension sous l'effet du seul poids de l'ensemble moto + pilote (moto de 200 kg, tous pleins faits et pilote 70 kg). La position de ce point montre une course négative très importante, permettant à la suspension de fonctionner même lorsque l'avant de la moto est fortement délesté par les accélérations de celle-ci. En particulier, on observe que même un appui de 10 kg crée déjà un enfoncement de 10 mm. Une fourche télescopique fonctionne toujours avec une précontrainte. Cette précontrainte à laquelle s'ajoutent les forces de frottement font qu'un appui 4 à 5 fois supérieur est nécessaire pour exercer un début de compression. Cette absence de fonctionnement de la fourche télescopique sur les bosses en cas de délestage important est à l'origine d'un phénomène très dangereux à moto : le guidonnage. Ce phénomène est supprimé avec la nouvelle fourche. La courbe α = 0 est plus redressée que la courbe α = 25°. Cela signifie que la fourche est plus souple sur les oscillations résultant de petites dénivellations que sur les réactions au freinage violent. Cela implique que les petites dénivellations sont toujours très bien absorbées, mais que les forces très élevées induites par le freinage ne peuvent pas la faire talonner.

Une fourche télescopique a un débattement limité entre autre pour des raisons de géométrie traitées au paragraphe précédent. Cela explique qu'elle ait toujours de la précontrainte et néanmoins qu'elle soit toujours à la limite de talonner sur les freinages. Cela n'empêche pas qu'elle ait un coefficient d'élasticité beaucoup plus bas, (suspension plus dure) sa suspension linéaire ne pouvant concilier les extrêmes.

Cette nouvelle fourche très progressive, réagissant plus souplement aux petites dénivellations qu'aux freinages violents, capable de réagir sur des variations de charge de moins de 10 kg, s'avère dans son fonctionnement très supérieure à une fourche télescopique.

La diversité des applications présentées ici montre que tout véhicule à deux roues suspendu tire avantage à utiliser cette invention. Seul le cas de la moto tout terrain n'a pas été traité, mais il est assimilé au cas du vélo de descente par les débattements exigés (250 à 300 millimètres). Il est donc possible de substituer à toute fourche télescopique la fourche selon l'invention sans modification de leur conception générale. Seule restriction : les carénages, phares et tableau de bord des motos doivent être aménagés pour la recevoir, mais ces modifications n'entraînent pas de bouleversement esthétique. Les carénages très pointus (pour une recherche aérodynamique de portance négative) dissimulent facilement la proéminence avant de cette nouvelle fourche. Les nouvelles optiques à surface complexe gagnent aussi beaucoup de place à l'intérieur des carénages facilitant le montage de cette nouvelle fourche. Si l'adaptation de cette invention est possible à tous ces véhicules, il est également très intéressant de les étudier pour recevoir spécifiquement cette nouvelle fourche. En particulier, il est avantageux d'utiliser des angles de chasse plus réduits, les angles actuels n'étant justifiés que par le souci d'assurer le bon fonctionnement des fourches télescopiques. Cette réduction de l'angle de chasse permet de moindres variations de chasse et donc d'utiliser la version de l'invention à biellettes parallèles dans tous les cas.

Comme il va de soi, l'invention ne se limite pas aux seules formes d'exécution de cette fourche décrites ci-dessus à titre d'exemples. C'est ainsi notamment que la fourche pourrait ne comporter qu'un bras, que le bâti rigide pourrait être différent et ne comporter, par exemple, qu'une platine inférieure et qu'un flasque vertical, sans que l'on sorte pour autant du cadre de l'invention tel que défini dans les revendications jointes.

## Revendications

1. Fourche avant suspendue pour véhicule à deux roues, notamment vélo tout terrain et motocyclette, du type comportant au moins un bras (2) à l'extrémité inférieure duquel est monté l'axe (3) de la roue et dont l'extrémité supérieure est associée au pivot de direction (13), sur le pivot de direction (13) et en avant de celui-ci étant fixé un bâti rigide comprenant au moins un flasque vertical (12), servant au montage de deux axes horizontaux (9, 10) parallèles à l'axe (3) de la roue et décalés verticalement l'un par rapport à l'autre, d'articulation des extrémités de deux biellettes supérieure et inférieure (7, 8), dont les autres extrémités sont articulées (4, 5) sur chaque bras (2) de la fourche dans le tiers supérieur de la longueur de celui-ci, les axes d'articulation (9, 10) des biellettes (7, 8) sur le flasque (12) étant situés en avant des axes d'articulation (4, 5) de ces mêmes biellettes (7, 8) sur les bras (2), **caractérisée en ce que** un élément élastique amortisseur (16) travaillant en compression a une extrémité (17) fixée sur le bâti rigide et son autre extrémité (18) fixée à l'une des deux biellettes supérieure (7) ou inférieure (8).

2. Fourche selon la revendication 1, **caractérisée en ce que** le bâti rigide comprend deux platines horizontales, supérieure (15) et inférieure (14), fixées respectivement aux extrémités supérieure et inférieure du pivot de direction (13), sur les bords latéraux desquelles sont fixés les flasques verticaux (12).

3. Fourche selon l'une quelconque des revendications 1 et 2, **caractérisée en ce qu'**elle comprend deux bras parallèles (2) réunis par une pièce de rigidification, chaque biellette (7, 8) se dédoublant en deux branches solidarisées.

4. Fourche selon la revendication 2, **caractérisée en ce que** l'axe d'articulation (9) de la biellette supérieure (7) sur le bâti rigide est situé entre les deux platines (14, 15), tandis que l'axe d'articulation (10) de la biellette inférieure (8) sur le bâti rigide est situé en dessous de la platine inférieure (14).

5. Fourche selon la revendication 3, **caractérisé en ce que** les branches des deux biellettes (7, 8) ont un écartement supérieur aux largeurs respectives de la platine inférieure (14), du pivot de direction (13) et de l'élément amortisseur (16), pour pouvoir passer de part et d'autre de ces éléments.

6. Fourche selon les revendications 2 et 3, **caractérisée en ce que** les branches des biellettes (7, 8) sont situées à l'intérieur des flasques verticaux (12).

7. Fourche selon les revendications 2 et 3, **caractérisée en ce que** les branches des biellettes sont situées à l'extérieur des flasques verticaux.

8. Fourche selon l'une quelconque des revendications 1 à 7, **caractérisée en ce que** l'élément élastique amortisseur (16) agit sur l'une des deux biellettes (7, 8) par l'intermédiaire d'une pièce (19) solidaire de la biellette considérée, l'axe d'articulation (18) de l'amortisseur (16) sur cette pièce étant déporté par rapport à l'axe de la biellette, de telle sorte qu'en position de compression maximale du ressort la ligne passant par l'axe d'articulation (18) de l'amortisseur et par l'axe d'articulation (9) de la biellette considérée sur le bâti rigide, soit sensiblement perpendiculaire à l'axe de l'amortisseur (16).

9. Fourche selon l'une quelconque des revendications 1 à 7, **caractérisée en ce que** l'extrémité inférieure de l'élément élastique amortisseur (16) est montée articulée sur une patte (20) elle-même montée pivotante sur le bâti rigide et sur laquelle est montée pivotante une extrémité d'une tige (25) dont l'autre extrémité est montée pivotante sur la biellette inférieure (14), les trois axes d'articulation (22, 23, 24) sur la patte (20) étant disposés de façon à former un triangle dans lequel l'axe d'articulation (23) de l'extrémité inférieure de l'amortisseur (16) sur la patte (20) est situé entre les deux autres axes (23, 24) et en dessous de ceux-ci.

## Patentansprüche

1. Aufgehängte Vordergabel für ein zweirädriges Fahrzeug, insbesondere ein Geländefährrad oder ein Motorrad, mit mindestens einem Schenkel (2), an dessen unterem Ende die Achse (3) des Rades gelagert ist und dessen oberes Ende der Lenkachse (13) zugeordnet ist, wobei auf der Lenkachse (13) und vor ihr ein starres Gestell befestigt ist mit mindestens einem vertikalen Flansch (12), der zur Befestigung zweier horizontaler Achsen (9, 10) parallel zur Achse (3) des Rades und zueinander vertikal versetzt dient zum Schwenken der Enden einer oberen und einer unteren Stange (7, 8), deren andere Enden an jedem Schenkel (2) der Gabel im oberen Drittel ihrer Länge angelenkt (4, 5) sind, wobei die Schwenkachsen (9, 10) der Stangen (7, 8) auf dem Element (12) vor den Schwenkachsen (4, 5) derselben Stangen (7, 8) auf dem Schenkel (2) angeordnet sind, **gekennzeichnet durch** ein in Kompression betriebenes elastisches Dämpfungselement (16) mit einem an dem starren Gestell befestigten Ende (17) und einem an der oberen Stange (7) oder der unteren Stange (8) befestigten anderen Ende (18).

2. Gabel nach Anspruch 1, **dadurch gekennzeichnet, dass** das starre Gestell zwei horizontale Platten aufweist, und zwar oben (15) und unten (14), die an dem oberen bzw. dem unteren Ende der Lenkachse (13) angeordnet sind, an deren seitlichen Rändern die vertikalen Flansche (12) befestigt sind.

3. Gabel nach einem der Ansprüche 1 und 2, **dadurch gekennzeichnet, daß** sie zwei parallele Schenkel (2) aufweist, die mittels eines Versteifungsteils miteinander verbunden sind, wobei sich jede Stange (7, 8) in zwei miteinander verbundene Arme gabelt.

4. Gabel nach Anspruch 2, **dadurch gekennzeichnet, dass** sich die Schwenkachse (9) der oberen Stange (7) auf dem starren Gestell zwischen den beiden Platten (14, 15) befindet, während die Schwenkachse (10) der unteren Stange (8) auf dem starren Gestell sich unterhalb der unteren Platte (14) befindet.

5. Gabel nach Anspruch 3, **dadurch gekennzeichnet, dass** die Arme der beiden Stangen (7, 8) einen Abstand haben, der größer als die jeweilige Breite der oberen Platte (14), der Lenkachse (13) und des Dämpfungeelements (16) ist, um von der einen zur anderen Seite dieser Elemente gelangen zu können.

6. Gabel nach Anspruch 2 und 3, **dadurch gekennzeichnet, dass** sich die Arme der Stangen (7, 8) innerhalb der vertikalen Flansche (12) befinden.

7. Gabel nach Anspruch 2 und 3, **dadurch gekennzeichnet, dass** sich die Arme der Stangen außerhalb der vertikalen Flansche befinden.

8. Gabel nach einem der Ansprüche 1 bis 7, **dadurch gekennzeichnet, dass** das elastische Dämpfungselement (16) auf eine der beiden Stangen (7, 8) mittels eines Teils (19) einwirkt, das mit der betreffenden Stange verbunden ist, wobei die Schwenkachse (18) des Dämpfers (16) auf diesem Teil bezüglich der Achse der Stange versetzt ist, so dass in der maximalen Kompressionsstellung der Feder die Linie, welche durch die Schwenkachse (18) des Dämpfers und durch die Schwenkachse (9) der betreffenden Stange auf dem starren Gestell verläuft, im wesentlichen senkrecht zur Achse des Dämpfers (16) ist.

9. Gabel nach einem der Ansprüche 1 bis 7, **dadurch gekennzeichnet, dass** das untere Ende des elastischen Dämpfungselements (16) an einem Ansatz (20) gelenkig gelagert ist, der seinerseits auf dem starren Gestell schwenkbar gelagert ist und an dem ein Ende eines Stabes (25) schwenkbar gelagert ist, dessen anderes Ende an der unteren Stange (14) schwenkbar gelagert ist, wobei die drei Schwenkachsen (22, 23, 24) auf dem Ansatz (20) derart angeordnet sind, dass sie ein Dreieck bilden, in welchem die Schwenkachse (23) des unteren Endes des Dämpfers (16) auf dem Ansatz (20) sich zwischen den beiden anderen Achsen (23, 24) und unterhalb von ihnen befindet.

## Claims

1. Suspended front fork for a two-wheeled vehicle, in particular for a mountain bike and a motorbike, of the type comprising at least one arm (2) at the lower end of which the wheel axle (3) is fitted, and the upper end of which is associated with the steering pivot (13), on the steering pivot (13) and to the front of the latter there being secured a rigid frame comprising at least one vertical flange (12), which is used for fitting of two horizontal shafts (9,10) which are parallel to the wheel axle (3) and are offset vertically relative to one another, for articulation of the ends of two, upper and lower connecting rods (7,8), the other ends (4,5) of which are articulated on each arm (2) of the fork, in the upper third of the length of the latter, the shafts (9,10) for articulation of the connecting rods (7,8) on the flange (12) being situated to the front of the shafts (4,5) for articulation of these same connecting rods (7,8) on the arms (2), **characterised in that** a resilient shock-absorption element (16) operates with compression an end (17) which is secured to the rigid frame, and the other end (18) which is secured to one of the two, upper (7) or lower (8) connecting rods.

2. Fork according to claim 1, **characterised in that** the rigid frame comprises two, upper (15) and lower (14) horizontal plates, which are secured respectively to the upper and lower ends of the steering pivot (13), on the lateral edges of which the vertical flanges (12) are secured.

3. Fork according to claim 1 or claim 2, **characterised in that** it comprises two parallel arms (2) which are connected by a strengthening part, each connecting rod (7,8) being divided into two branches which are rendered integral.

4. Fork according to claim 2, **characterised in that** the shaft (9) for articulation of the upper connecting rod (7) on the rigid frame is situated between the two plates (14,15), whereas the-shaft (10) for articulation of the lower connecting rod (8) on the rigid frame is situated below the lower plate (14).

5. Fork according to claim 3, **characterised in that** the branches of the two connecting rods (7,8) have spacing which is greater than the respective widths of the lower plate (14), of the steering pivot (13) and of the shock-absorption element (16), in order to be able to pass on both sides of these elements.

6. Fork according to claim 2 and claim 3, **characterised in that** the branches of the connecting rods (7,8) are situated inside the vertical flanges (12).

7. Fork according to claim 2 and claim 3, **characterised in that** the branches of the connecting rods are situated outside the vertical flanges.

8. Fork according to any one of claims 1 to 7, **characterised in that** the resilient shock-absorption element (16) acts on one of the two connecting rods (7,8) by means of a part (19) which is integral with the connecting rod concerned, the shaft (18) for articulation of the shock absorber (16) on this part being offset relative to the shaft of the connecting rod, such that in the position of maximal compression of the spring, the line which passes through the shaft (18) for articulation of the shock absorber and through the shaft (9) for articulation of the connecting rod concerned on the rigid frame, is substantially perpendicular to the shaft of the shock absorber (16).

9. Fork according to any one of claims 1 to 7, **characterised in that** the lower end of the resilient shock absorption element (16) is fitted in articulated manner on a lug (20), which itself is fitted such as to pivot on the rigid frame, and on which there is fitted such as to pivot an end of a rod (25), the other end of which is fitted such as to pivot on the lower connecting rod (14), the three shafts (22,23,24) for articulation on the lug (20) being disposed such as to form a triangle in which the shaft (23) for articulation of the lower end of the shock absorber (16) on the lug (20) is situated between the other two shafts (23,24), and below the latter.
